# EUROPÄISCHE PATENTANMELDUNG

(11) **EP 0 913 190 A1**
(43) Veröffentlichungstag der Anmeldung: **06.05.1999**
(21) Anmeldenummer: 98117647.2
(22) Anmeldetag: 17.09.1998
(51) Int. Cl.: B01J 2/00, G03C 5/26

(54) **Verfahren zur Herstellung von als Granulat oder Tablette formulierten fotografischen Prozesschemikalien**

(30) Priorität: 23.10.1997 DE 19746879
(71) Anmelder: Tetenal Photowerk GmbH & Co, 22844 Norderstedt (DE)
(72) Erfinder: Hengefeld, Axel Dr., 20249 Hamburg (DE)
(74) Vertreter: Glawe, Delfs, Moll & Partner

(57) **Zusammenfassung**

Gegenstand der Erfindung ist ein Verfahren zur Herstellung von als Granulat formulierten fotografischen Prozeßchemikalien, das folgende Schritte aufweist:
a) Zusammengeben der Prozeßchemikalien mit wenigstens einem fotografisch inerten, wasserlöslichen, oberhalb 25°C schmelzenden Hilfsstoff;
b) Erwärmen der Mischung auf eine Temperatur, die mindestens der Schmelztemperatur des Hilfsstoffs entspricht;
c) Durchführen einer Schmelzgranulierung unter Vermischung von Prozeßchemikalien und Hilfsstoff.
Mit dem erfindungsgemäßen Verfahren lassen sich kostengünstig und schnell Granulate fotografischer Prozeßchemikalien herstellen, die anschließend zu harten und lagerstabilen Tabletten verpreßt werden können. Diese Tabletten sind insbesondere zum Einsatz in sog. Minilabs geeignet.

## Beschreibung

Die Erfindung betrifft ein Verfahren zur Herstellung von als Granulat bzw. Tablette formulierten fotografischen Prozeßchemikalien.

Belichtete Silberhalogenidfilme werden in kommerziellen Labors vollautomatisch entwickelt und verarbeitet. Farbnegativfilme beispielsweise durchlaufen dabei ein Entwicklerbad, ein Bleichbad, ein Fixierbad und in der Regel ein Stabilisierbad bzw. mehrere Waschschritte. Die Schritte des Bleichens und Fixierens können ggf. mittels eines Bleichfixierbades in einem einzigen Verarbeitungsschritt kombiniert werden. Die fertig entwickelten Negative werden auf Colorpapier belichtet, das belichtete Colorpapier durchläuft anschließend ebenfalls ein Entwicklungsbad, in der Regel ein kombiniertes Bleichfixierbad und abschließende Waschschritte. Die Waschschritte können ggf. durch ein Stabilisierbad ersetzt werden.

Die verschiedenen Verarbeitungsbäder erschöpfen sich im laufe der Verwendung. Während ein Fotoamateur erschöpfte Bäder in der Regel auswechselt, erfolgt bei kommerziellen Fotolabors eine Auffrischung verbrauchter Lösungen. Im Handel sind zu diesem Zweck die entsprechenden Prozeßchemikalien als Flüssigkonzentrate oder Pulver erhältlich.

Flüssigkonzentrate benötigen aufgrund ihres Wasseranteils bei Transport und Lagerung verhältnismäßig viel Platz. Die leeren Konzentratbehälter stellen ein erhebliches Abfallvolumen dar.

Chemikalien in Pulverform sind schwierig zu handhaben. Da die Pulver bei der Handhabung stauben können, müssen Vorkehrungen zur Vermeidung gesundheitlicher Beeinträchtigungen der Anwender getroffen werden.

Es ist daher bereits vorgeschlagen worden (EP-A 0 678 782), fotografische Prozeßchemikalien als Granulat zu formulieren. Es werden verschiedene Varianten der Feuchtgranulierung (beispielsweise Wirbelschichtgranulierung) eingesetzt.

Bekannt ist es ebenfalls, aus einem Granulat und ggf. weiteren pulverförmigen Bestandteilen Tabletten zu pressen (EP-A 0 678 782). Die fotografischen Verarbeitungsmaschinen weisen Vorratsmagazine für solche Tabletten auf und dosieren diese nach Bedarf automatisch in die jeweiligen Bäder ein. Gebräuchlich ist die Bereitstellung der fotografischen Prozeßchemikalien in Form von Tabletten insbesondere bei kleineren automatischen Entwicklungsmaschinen, die in sog. Minilabs verwendet werden. Die Tabletten müssen eine ausreichende Härte und Abriebfestigkeit aufweisen, damit die automatische Handhabung in den Magazinen nicht zu Tablettenbruch führt und der Betrieb nicht durch Tablettenabrieb beeinträchtigt wird. Diese Eigenschaften der Tablette müssen auch nach längerer Lagerung gewährleistet sein.

Der vorliegenden Erfindung liegt die Aufgabe zugrunde, ein Verfahren der eingangs genannten Art zu schaffen, durch das sich fotografische Prozeßchemikalien in Granulat- bzw. Tablettenform kostengünstig und mit geringem Energieaufwand herstellen lassen.

Das erfindungsgemäße Verfahren zur Herstellung von als Granulat formulierten fotografischen Prozeßchemikalien weist folgende Schritte auf:
a) Zusammengeben der Prozeßchemikalien mit wenigstens einem fotografisch inerten, wasserlöslichen, oberhalb 25°C (vorzugsweise oberhalb 30°C) schmelzenden Hilfsstoff;
b) Erwärmen der Mischung auf eine Temperatur, die mindestens der Schmelztemperatur des Hilfsstoffs entspricht;
c) Durchführen einer Schmelzgranulierung unter Vermischung von Prozeßchemikalien und Hilfsstoff.

Kern der Erfindung ist die Schmelzgranulierung, die auch als thermoplastische Granulierung bezeichnet wird. Die Granulatbindung wird bei diesem Vorgang mit Hilfe eines niedrig schmelzenden Hilfsstoffes unter Zufuhr von thermischer Energie (diese kann auch als mechanische Energie zugeführt und in der Mischung in thermische Energie umgewandelt werden) durchgeführt. Wasser oder andere bei Raumtemperatur flüssige Lösungsmittel werden nicht zugesetzt.

Der verwendete Hilfsstoff schmilzt oberhalb 25°C, vorzugsweise oberhalb 30°C. Dies bedeutet, daß er oberhalb der genannten Temperatur einen Aggregatzustand einnimmt, indem er die in der Regel als Pulver zugegebenen fotografischen Prozeßchemikalien binden und in eine Granulatform überführen kann. Unter "Schmelzen" im Sinne der Erfindung ist dabei jede Art der Erweichung zu verstehen, die zum Erzielen einer solchen Bindungs- und Granulierwirkung ausreicht. Ein vollständiger Übergang in die flüssige Phase ist zu diesem Zweck nicht unbedingt erforderlich. Insbesondere polymere Hilfsstoffe zeigen zudem keinen scharfen Schmelzpunkt, sondern einen mehr oder weniger breiten Erweichungsbereich. Das Kriterium "Schmelzen" im Sinne der Erfindung ist bereits dann erfüllt, wenn die Erweichung oberhalb 25°C ausreichend fortgeschritten ist, um die beschriebene Bindewirkung zu erfüllen.

Der verwendete Hilfsstoff ist fotografisch inert oder ein fotografisch förderlicher Rezepturbestandteil. Dies bedeutet, daß der jeweilige fotografische Verarbeitungsprozeß, in dem das Granulat bzw. eine daraus hergestellte Tablette eingesetzt werden soll, entweder durch die Anwesenheit des Hilfsstoffes nicht oder allenfalls in unwesentlicher Weise nachteilig beeinflußt wird oder aber der Hilfsstoff selbst eine fotochemisch aktive Komponente der Rezeptur darstellt.

Der oder die Hilfsstoffe ist bzw. sind wasserlöslich. Eine unter Verwendung des Hilfsstoffes hergestellte Prozeßchemikalie löst sich bei Einstellung üblicher Konzentrationen der Prozeßchemikalien in wäßriger Lösung und bei den üblichen Badtemperaturen vollständig auf. Der Hilfsstoff muß in einem solchen Umfang wasserlöslich sein, daß dieses Auflösen zur Einstellung der gewünschten Badkonzentration nicht behindert wird.

Bei der Durchführung des erfindungsgemäßen Verfahrens wird die Mischung auf eine Temperatur erwärmt, die mindestens der Schmelztemperatur des Hilfsstoffs entspricht. Wie oben bereits ausgeführt, muß der Hilfsstoff nicht notwendigerweise einen scharfen Schmelzpunkt aufweisen. Unter einem Erwärmen auf mindestens die Schmelztemperatur ist dann zu verstehen, daß die Temperatur soweit erhöht wird, daß der Hilfsstoff erweicht und im Rahmen der Schmelzgranulierung seine die übrigen Bestandteile der Mischung als Granulat bindende Wirkung ausüben kann.

Kern der Erfindung ist es, die Granulatbindung durch das technisch mit verhältnismäßig geringem Aufwand verbundene Schmelzgranulierverfahren herbeizuführen. Die im Stand der Technik bekannten Granulierverfahren sind demgegenüber Naßgranulierverfahren, bei denen mit Hilfe eines bei Raumtemperatur flüssigen Lösungsmittels granuliert wird, das anschließend durch Trocknen wieder entfernt werden muß. Beispielsweise muß beim Wirbelschichtgranulieren zunächst die Pulvermischung auf etwa 45 - 60°C aufgeheizt werden, anschließend wird eine wäßrige Lösung des Granulatbindemittels sehr langsam eingesprüht. Das mit eingesprühte Wasser wird verdunstet, das Granulat wird getrocknet und muß vor einer Weiterverarbeitung zunächst auf Temperaturen von höchstens etwa 35°C abkühlen. Dieses Granulationsverfahren ist zeit- und energieaufwendig.

Beim erfindungsgemäßen Verfahren müssen demgegenüber lediglich die Pulvermischung und der Hilfsstoff auf die gewünschte Temperatur (in der Regel wird diese etwa zwischen 40 und 90°C, bevorzugt 50 - 70°C liegen) erwärmt werden. Anschließend wird in einem Mischer mechanisch vermischt, die in der Regel feinkörnigen Pulverbestandteile der Verarbeitungschemikalie verkleben dabei mit dem Hilfsstoff untereinander und agglomerieren zu größeren Partikeln. Das anschließende Abkühlen kann an der Raumluft erfolgen. Weder die eingesetzten Chemikalien noch das erhaltene Granulat müssen einem Trocknungsschritt unterworfen werden.

Alternativ ist es möglich, die Schmelzgranulierung durch Aufdüsen bzw. Aufsprühen des schmelzbaren Hilfsstoffes auf die Pulvermischung durchzuführen. Diese Pulvermischung kann Raumtemperatur aufweisen oder vorzugsweise auf eine Temperatur im Bereich der Schmelztemperatur des Hilfsstoffes erwärmt sein.

Es ist bekannt, daß bei der im Stand der Technik verwendeten Wirbelschichtgranulation ein Granulat mit einem hohen spezifischen Volumen und einer sehr unregelmäßigen Oberflächenstruktur entsteht. Dies erleichtert das anschließende Verpressen des Granulats zu harten, bruch- und abriebfesten Tabletten. Bei der Schmelzgranulierung entsteht demgegenüber ein Granulat mit geringerem spezifischen Volumen (d. h. höherer spezifischer Schüttdichte) und einer gleichmäßigeren Oberflächenstruktur. Wie unten noch näher erläutert wird, lassen sich aus diesem Granulat überraschenderweise dennoch Tabletten ausreichender Härte und Abriebfestigkeit herstellen, die zudem diese gewünschten Eigenschaften auch nach längerer Lagerung nicht verlieren.

Erfindungsgemäß können alle Bestandteile eines fotografischen Verarbeitunsbades (beispielsweise Entwicklungs-, Bleich-, Fixier-, Bleichfixier-, oder Stabilisierbades) in einem einzigen Granulat vereinigt werden, alternativ können lediglich ein oder einige Bestandteile eines solchen Bades zu einem Granulat verarbeitet werden. Die übrigen Bestandteile können dann entweder als separat hergestelltes Granulat zugegeben werden oder aber man verpreßt eine Kombination von einem oder mehreren erfindungsgemäß hergestellten Granulaten und ggf. verbleibenden Pulverbestandteilen zu einer Tablette.

Der verwendete Hilfsstoff bzw. das verwendete Hilfsstoffgemisch ist vorzugsweise bei 30 - 180°C, weiter vorzugsweise 40 - 120°C schmelzbar. Besonders bevorzugt ist der bereits genannte Bereich von 50 - 70°C. Zur technischen Bedeutung des Begriffs "schmelzbar" bzw. "Schmelztemperatur" wird auf die obigen Erläuterungen verwiesen.

Der verwendete Hilfsstoff enthält vorzugsweise organische Oligo- oder Polymere oder aber monomere Stoffe mit Schmelzbzw. Erweichungsbereichen im gewünschten Temperaturfenster. Bevorzugt kann der Hilfsstoff Polyethylenglykol, Polyvinylalkohole, Polyacrylate bzw. Polymethacrylate enthalten. Unter den Polyacrylaten bzw. -methacrylaten sind beispielsweise Aminoalkylmethacrylatcopolymere, Methacrylsäure-Methacrylatcopolymere, und Methacrylsäure-Acrylatcopolymere verwendbar. Verwendbar als Hilfsstoff bzw. Bestandteil eines Hilfsstoffes sind ferner Carbonsäuren wie beispielsweise Ascorbinsäure, Maleinsäure oder andere Dicarbonsäuren; Propanole, Propandiole und Butanole wie beispielsweise 2-Methyl-2-propyl-1,3-propandiol, 2,2-Dimethyl-1,3-propandiol, 2-Butyl-2-ethyl-1,3-propandiol, 2-Methyl-2-propyl-1,3-propandiol, 2-Ethyl-2-(hydroxymethyl)-1,3-propandiol, 2-(Hydroxymethyl)-2-methyl-1,3-propandiol, 2,2-Dimethyl-1-propanol, 2,3,3-Trimethyl-2-butanol, 2-Amino-2-methyl-1,3-propandiol; höhere Alkohole mit mehr als 12 C-Atomen; ferner Polyalkohole wie beispielsweise Zuckeralkohole oder Zucker sowie Tenside. Unter den Polyalkoholen seien beispielsweise Threit, Erythrit, Pentaerythrittetraacetat, Arabit, Adonit, Xylit, Sorbit und Mannit genannt.

Bei einer besonders bevorzugten Ausführungsform der Erfindung enthält der Hilfsstoff Polyethylenglykole. In dem Polyethylenglykol können weitere Hilfsstoffbestandteile gelöst und/oder suspendiert sein. Diese weiteren Hilfsstoffbestandteile können beispielsweise aus den oben genannten Stoffen ausgewählt werden. Es können auch Stoffe verwendet werden, die selbst bei der Arbeitstemperatur des erfindungsgemäßen Verfahrens nicht schmelzbar sind, sich jedoch im geschmolzenem Polyethylenglykol oder sonstigen geschmolzenen Hilfsstoffbestandteilen lösen oder darin suspendiert werden. Beispielsweise seien hier Cellulosederivate, Stärke und Dextrindervivate sowie Polyvinylpyrrolidone und nicht schmelzbare Polyoxycarbonsäuren genannt.

Gegenstand der Erfindung ist ferner ein Verfahren zur Herstellung von als Tablette formulierten fotografischen Prozeßchemikalien, das folgende Schritte aufweist:
a) Schmelzgranulieren wenigstens eines Teils der Tablettenrohstoffe in einem Verfahren gemäß einem der Patentansprüche 1 bis 5
b) Verpressen des Schmelzgranulats und ggf. der verbleibenden Tablettenrohstoffe zu einer Tablette.

Dieses Verfahren nutzt somit ein oder mehrere der erfindungsgemäß hergestellten Granulate als Ausgangsstoffe und verarbeitet diese weiter zu Tabletten. Der Begriff "Tablette" bezeichnet im Rahmen der Erfindung jeglichen Festkörper, der eine durch das Verpressen herbeigeführte definierte Form aufweist.

Erfindungsgemäß können sämtliche für ein Verarbeitungsbad benötigten Prozeßchemikalien zunächst schmelzgranuliert und zu einem oder mehreren Granulaten verarbeitet werden, anschließend erfolgt die Verpressung des Granulats oder der Granulate zu einer Tablette. Ebenfalls möglich ist es im Rahmen der Erfindung, nur einen Teil der in der Regel pulverförmigen Bestandteile des fotografischen Verarbeitungsbades (Tablettenrohstoffe) zu einem oder mehreren Schmelzgranulaten zu verarbeiten und das Granulate bzw. die Granulate mit den vorzugsweise noch in Pulverform vorliegenden verbleibenden Tablettenrohstoffen zu einer Tablette zu verpressen. Der Granulatanteil einer solchen Tablette muß ausreichend hoch sein, um die gewünschte Härte und Abriebfestigkeit sicherzustellen.

Schmelzgranulate weisen, wie oben bereits beschrieben, in der Regel ein geringes spezifisches Volumen (eine hohe Schüttdichte) auf und besitzen eine gleichmäßige Oberflächenstruktur. Dies läßt zunächst erwarten, daß aus solchen Schmelzgranulaten verpreßte Tabletten nur eine geringe Härte aufweisen. Überraschenderweise ist dies nicht der Fall, die erfindungsgemäß hergestellten Tabletten weisen eine hohe Härte auf, die bei längerer Lagerung sogar noch zunehmen kann. Die Abriebfestigkeit ist ebenfalls so hoch, daß im Falle einer Verwendung in sog. Minilabs der automatische Betrieb der Vorratsmagazine und Tablettenzuführungen nicht beeinträchtigt wird.

Vorzugsweise beträgt die Härte einer nach dem erfindungsgemäßen Verfahren hergestellten Tablette wenigstens 400 N.

Die Härte wird gemessen mit einem Bruchfestigkeitstester TBH30 der Fa. ERWEKA. Die zu prüfende Tablette wird zwischen zwei ausfahrbare Backen eingespannt und mit einer ansteigenden Kraft beaufschlagt. Die zum Zerbrechen der Tablette erforderliche Kraft wird registriert (in N) und als Maß für die Tablettenhärte angegeben.

Da im Rahmen des erfindungsgemäßen Verfahrens keine wäßrigen Lösemittel verwendet werden, kann der Hilfsstoff auch hygroskopische und/oder feuchtigkeitsempfindliche Bestandteile wie beispielsweise Sorbit enthalten.

Die chemisch aktiven Bestandteile eines erfindungsgemäß herzustellenden Granulats bzw. einer solchen Tablette sind dem Fachmann geläufig und bedürfen keiner näheren Erläuterung. Beispielhaft seien typische Bestandteile eines erfindungsgemäß als Granulat bzw. Tablette formulierten Farbentwicklers genannt:
1. Die eigentliche Farbentwicklerchemikalie. Geeignete Entwicklersubstanzen sind dem Fachmann geläufig. Bevorzugt handelt es sich um N,N-dialkylierte p-Phenylendiaminderivate. Bspw. können entsprechende Derivate verwendet werden, die dem Fachmann unter der Bezeichnung CD-2, CD-3, CD-4 und CD-6 geläufig sind. Eine Beschreibung einiger geeigneter Farbentwickler findet sich in Ullmann's Encyclopedia of Industrial Chemistry, 5. Aufl., Bd. A20, S. 70 ff.
2. Puffer: Da Farbentwickler üblicherweise pH-Werte oberhalb von 9 benötigen, enthält die Entwicklerlösung in der Regel Puffer sowie ggf. alkalische Substanzen Geeignet sind bspw. Alkali- und Hydrogencarbonate, Phosphate, Borate, Tetraborate, o-Hydroxybenzoate, Hydroxide und dergleichen. Alkalische Amine wie bspw. Mono-, Di- oder Triethanolamin können gleichfalls zugesetzt werden.
3. Wasserenthärtungsmittel: Beim Arbeiten im alkalischen Bereich muß verhindert werden, daß im zur Zubereitung der fertigen Entwicklerlösung verwendeten Wasser ggf. vorhandene Alkali- und Erdalkaliionen als unlösliche Salze ausfallen. Als Wasserenthärtungsmittel werden vorzugsweise Komplexbildner, besonders bevorzugt Chelatbildner, eingesetzt. Als anorganische Komplexbildner können bspw. Polymetaphosphate und Polyorthophosphate eingesetzt werden. Bevorzugt werden jedoch organische Chelatbildner, bspw. in Form von Hydroxycarbonsäuren, eingesetzt. Geeignete Chelatbildner sind dem Fachmann geläufig und bspw. in Ullmann's Encyclopedia of Industrial Chemistry, 5. Aufl., Bd. A10, S. 95 ff. sowie in EP-A-0 415 455, S. 14 beschrieben. Sie umfassen bevorzugt Aminoessigsäurederivate wie bspw. Nitrilotriessigsäure (NTA), Ethylendiamintetraessigsäure (EDTA), Diethylentriaminpentaessigsäure (DTPA), Hydroxyethandiphosphonsäure (HEDP), Aminotrimethylenphosphonsäure (ATMP), Salze der vorgenannten Stoffe und dergleichen.
4. Optische Aufheller: Als optische Aufheller werden insbesondere Stilbenderivate wie bspw. Stilben-2,2-disulfonsäuren verwendet. Geeignete Aufheller werden bspw. von der Ciba Geigy AG unter den Namen Tinopal SFP® vertrieben. Es handelt sich um 4,4'-Bis-2-diethylamino-4-(2,5-disulfophenylamino)-s-triazinyl-6-aminostilben-2,2'-disulfonsäurenatriumsalz.
5. Konservierungsmittel/Antioxidantien: Hier werden insbesondere Hydroxylaminderivate eingesetzt, die bspw. aus EP-A-682 289 bekannt sind. Bei Bedarf können zusätzlich andere Antioxidantien wie bspw. Sulfite eingesetzt werden.
6. Antischleiermittel: Als Antischleiermittel (antifoggants) werden insbesondere Halogenidionen (bevorzugt Chloride oder Bromide) eingesetzt, die bspw. in Form der Alkalihalogenide eingesetzt werden. Organische Antischleiermittel können ggf. ebenfalls zugesetzt werden, insbesondere Stickstoffheterocyclen wie bspw. Benzotriazol, 6-Nitrobenzimidazol, 5-Nitroisoindazol, 5-Methylbenzotriazol, 5-Nitrobenzotriazol, 5-Chlorbenzotriazol, 2-Thiazolylbenzimidazol, 2-Thiazolylmethylbenzimidazol, Indazol, Adenin und dergleichen.
7. Lösevermittler, Emulgatoren: Zu diesem Zweck sind jegliche oberflächenaktive Stoffe geeignet. Es können bspw. Arylsulfonsäuren, Arylphosphonsäuren, aliphatische und aromatische Carbonsäuren, ggf. in oligomerisierter oder polymerisierter Form, verwendet werden. Geeignet ist bspw. Polymaleinsäureanhydrid, ggf. hydrolysiert oder teilhydrolysiert (PMSAH).
8. Zusatzstoffe, die die Beständigkeit gegenüber Feuchtigkeit erhöhen und/oder als Bindemittel dienen und/oder das Löseverhalten des Farbentwicklers beim Ansetzen der fertigen Lösung verbessern. Diese Zusatzstoffe sind bereits in EP-A-0 589 624, EP-A-0 682 289 und EP-A-0 687 951 beschrieben, auf die entsprechenden Offenbarungen wird Bezug genommen. Bevorzugt werden als Zusatz- bzw. Füllstoffe Mono-, Oligo- und/oder Polysaccharide, Zuckeralkohole, Derivate der vorgenannten Stoffe (insbesondere Amino- und/oder Thioderivate) sowie Polyether (insbesondere Polyethylen- und/oder -propylenglykole) verwendet. Der Begriff Oligosaccharide bezeichnet Zucker mit 2 bis 7 Saccharideinheiten im Molekül. Die Zuckeralkohole Mannit, Sorbit und/oder Polyethylenglykol sind als Zusatz- bzw. Füllstoff besonders bevorzugt. Als andere geeignete Polysaccharide seien beispielhaft genannt Malzzucker, Cellobiose, Trehalose, Gentiobiose, Isomaltose, Milchzucker, Raffinose, Gentianose, Stachyose, Xylan, Araban, Glycogen, Dextran, Inulin, Levan, Galactan, Agarose, Amylose, Sucrose und Agarobiose. Im übrigen wird hier insbesondere auf die Aufzählung geeigneter Saccharide in EP-A-0 682 289 Bezug genommen. Für die Offenbarung geeigneter Polyether wird insbesondere auf EP-A-0 687 951 Bezug genommen.

Die Aufzählung dieser möglichen Bestandteile ist nicht abschließend, dem Fachmann ist geläufig, daß ggf. einige der genannten Bestandteile weggelassen bzw. andere Bestandteile, bspw. Entwicklungsbeschleuniger, zugefügt werden können.

Hinsichtlich möglicher Bestandteile eines Granulats bzw. einer Tablette zur Herstellung von Bleich/Fixierbädern, Stabilisierbädern oder anderen im Rahmen der Verarbeitung von Silberhalogenidfilmen verwendeten Bädern wird beispielhaft verwiesen auf die Offenbarung in Ullmanns Encyclopedia of Industrial chemistry, 5. Auflage, Band A20, Kapitel "Photography".

Die Erfindung wird nachfolgend anhand von Beispielen erläutert.

### I. Herstellung von Tabletten zur Farbentwicklung von Colornegativfilmen

### Beispiel 1

15,57 kg Kaliumcarbonat, 2,35 kg Natriumsulfit, 1,38 kg Penta-Natrium-diethylentriamin-pentaacetat, 2,03 kg Polyethylenglykol 6000 (durchschnittliche Molmasse 6000), 3,25 kg Natrium-p-toluolsulfonat und 0,91 kg Kaliumbromid werden in einen handelsüblichen LÖDIGE Chargenmischer FM50 mit beheizbarem Doppelmantel gegeben. Der Doppelmantel wurde mit auf 76°C temperiertem Wasser beheizt. Nach einer Mischzeit von 5 min mit eingeschaltetem Messerkopf war ein Schmelzen bzw. Erweichen des Polyethylenglykols 6000 sichtbar und die ursprünglich eingesetzte Pulvermischung war zu einem staubfreien Granulat gebunden. Das Schmelzgranulat wurde sofort aus dem Chargenmischer entleert und an der Luft auf Raumtemperatur abgekühlt. Die Korngrößenverteilung, das spezifische Volumen und der Feuchtigkeitsgehalt können Tabelle 1 entnommen werden.

Das erhaltene Schmelzgranulat wurde in einen Mischer gegeben und es wurden 1,62 kg D-Mannit, 1,46 kg Hydroxylaminsulfat, 80 g di-Natrium-1,2-Dihydroxybenzol-3,5-disulfonat, 2,64 kg Farbentwickler CD-4 und 0,18 kg Natrium-N-Myristoyl-N-methyl-β-alanin hinzugefügt. Anschließend wurde 10 min lang bis zum Erhalt einer homogenen Mischung vermischt.

Der so erhaltene "final blend" wurde auf einer Rundläufertablettenpresse vom Typ FETTE 2090 zu Tabletten mit einem Durchmesser von 30 mm, einer Solldicke von 10,4 ± 0,2 mm und einem Gewicht von 12,0 g verpreßt. Härte und Lagerstabilität der Tabletten wurden wie folgt bestimmt:
Tablettenhärte: 8 Tabletten wurden mit dem Tablettenbruchfestigkeitstester TBH 30 der Fa. ERWEKA auf Bruchfestigkeit geprüft und der Mittelwert gebildet. Eine Härte von > 400 N ist wünschenswert, um Beschädigungen beim Transport zu vermeiden.
Lagerungsstabilität: Für einen beschleunigten Lagerungstest werden jeweils 8 Tabletten, deren Dicke zuvor bestimmt wurde, in einen Beutel aus Aluminiumverbundfolie verschweißt und im Wärmeschrank bei 50°C aufbewahrt. Nach 110 bzw. 278 Stunden wird jeweils ein Beutel entnommen und nach Abkühlen auf 20°C die Mittelwerte der Tablettenhärte und die Zunahme der Dicke Δd(Δd = Dicke_{nach der Lagerung}- Dicke_{vor der Lagerung}) bestimmt.

### Beispiel 2

Wie in Beispiel 1 angegeben, wird zunächst das Schmelzgranulat hergestellt. Jedoch wird das fertige Schmelzgranulat zunächst nicht aus dem Chargenmischer entnommen, sondern es werden 1,62 kg D-Mannit zu dem warmen Schmelzgranulat gegeben und Mischer sowie Messerkopf werden für weitere 10 s eingeschaltet. Diese Zeitspanne ist ausreichend, um ein staubfreies homogenes Granulat zu erhalten. Anschließend wird der Mischer entleert und das erhaltene Schmelzgranulat an der Luft auf Raumtemperatur abgekühlt. Angaben zur Korngrößenverteilung, zum spezifischen Volumen und Feuchtigkeitsgehalt finden sich wieder in Tabelle 1.

Das abgekühlte Schmelzgranulat wird zusammen mit 1,46 kg Hydroxylaminsulfat, 80 g di-Natrium-1,2-Dihydroxybenzol-3,5-disulfonat, 2,64 kg Farbentwickler CD-4 und 0,18 kg Natrium-N-Myristoyl-N-methyl-β-alanin in einen Mischer gegeben und 10 min lang zu einer homogenen Masse vermischt.

Der so erhaltene final blend wird wie in Beispiel 1 angegeben zu Tabletten verpreßt, Tablettenhärte und Lagerungsstabilität werden wie oben angegeben bestimmt. Die Ergebnisse finden sich in Tabelle 2.

### Vergleichsbeispiel 1 (nicht erfindungsgemäß)

In einen handelsüblichen GLATT Wirbelschichtgranulator GCPG800 werden 354,6 kg Kaliumcarbonat, 53,6 kg Natriumsulfit, 31,5 kg Penta-Natrium-diethylentriamin-pentaacetat, 73,9 kg Natrium-p-toluolsulfonat und 37,0 kg D-Mannit gefüllt. Durch Aufsprühen einer Lösung von 46,2 kg Polyethylenglykol 6000 und 20,8 kg Kaliumbromid in 105 Liter Wasser mit einer Zweistoffdüse wird die Pulvermischung in der Wirbelschicht granuliert, anschließend bei einer Lufttemperatur von 70°C 15 min getrocknet und zuletzt bei einer Lufttemperatur von 0°C innerhalb von 10 min auf 35°C abgekühlt. Der gesamte Wirbelschichtgranulationsprozeß war nach 2 h 40 min beendet. Angaben zur Korngrößenverteilung, zum spezifischen Volumen und zum Feuchtegehalt finden sich in Tabelle 1.

Das erhaltene Granulat wurde in einen Mischer gegeben und mit folgenden Rohstoffen versetzt:
33,3 kg Hydroxylaminsulfat, 1,8 kg di-Natrium-1,2-dihydroxybenzol-3,5-disulfonat, 60,1 kg CD-4 und 4,0 kg Natrium-N-Myristoyl-N-methyl-β-alanin. Es wurde 10 min gemischt und der erhaltene final blend wie in Beispiel 1 beschrieben weiterverarbeitet. Die Eigenschaften der erhaltenen Tabletten finden sich in Tabelle 2.

**Tabelle 1**

| | Korngrößenverteilung | | | | | | | Spez. Vol. | Feuchte |
|---|---|---|---|---|---|---|---|---|---|
| | >710 | 710-500 | 500-355 | 355-250 | 250-180 | 180-125 | <125 | | |
| | [µm) | [µm] | [µm] | [µm] | [µm] | [µm] | [µm] | [ml/g] | [%] |
| Bsp.1 | 7,0% | 20,0% | 33,0% | 15,0% | 8,0% | 5,0% | 13,0% | 1,24 | 0,75 |
| Bsp.2 | 4,0% | 8,0% | 18,0% | 17,0% | 10,0% | 15,0% | 26,0% | 1,14 | 0,70 |
| Vgl.1 | 7,6% | 14,4% | 22,2% | 24,8% | 21,3% | 13,5% | 3,1% | 1,20 | 1,27 |

**Tabelle 2**

| | Versuchsbeginn | | Nach 110 h bei 50°C | | Nach 278 h bei 50°C | |
|---|---|---|---|---|---|---|
| | Dicke [mm] | Härte [N] | Δd[mm] | Härte [N] | Δd[mm] | Härte [N] |
| **Bsp.1** | 10,31 | 855 | 0,21 | 890 | 0,04 | 896 |
| **Bsp.2** | 10,31 | 859 | 0,22 | 927 | 0,04 | 967 |
| **Vgl.1** | 10,60 | 990 | 0,23 | 981 | 0,06 | 992 |

Aus den Tabellen ist ersichtlich, daß bei der Schmelzgranulierung auch bei Verzicht auf eine Vortrocknung der eingesetzten Rohstoffe ein Produkt mit einem niedrigeren Feuchtegehalt als bei Durchführung einer Wirbelschichtgranulierung erhalten wird. Die Korngrößenverteilung bei der Wirbelschichtgranulierung ist ungleichmäßiger, die vergleichsweise gleichmäßigere Korngrößenverteilungen aufweisenden Schmelzgranulate konnten dennoch zu Tabletten ausreichender Härte und guter Lagerstabilität verpreßt werden.

### II. Herstellung von Tabletten zur Farbentwicklung von Colorpapieren

### Beispiel 3

4,81 kg Natrium-p-toluolsulfonat, 100 g Natriumsulfit, 930 g Penta-Natrium-diethylentriamin-pentaacetat, 4,24 kg Polyethylenglykol 4000, 2,26 kg Bis(sulfoethyl)hydroxylamin-di-Natrium-Salz, 990 g Lithiumhydroxid-Monohydrat, 9,33 kg Kaliumcarbonat und 850 g Tinopal SFP® wurden in einen LÖDIGE Chargenmischer FM 50 mit beheizbarem Doppelmantel gefüllt. Der Doppelmantel wurde mit auf 75°C temperierten Wasser beheizt. Der Mischer und der Messerkopf wurde in Betrieb gesetzt, nach einer Mischzeit von 3 min 45 s erreichte die Pulvermischung 56°C. Nach weiteren 15 s Mischzeit war ein staubfreies Granulat entstanden. Dieses Granulat wurde aus dem Chargenmischer entleert und an der Luft auf Raumtemperatur abkühlen gelassen. Korngrößenverteilung, spezifisches Volumen und Feuchtegehalt sind in Tabelle 3 angegeben.

Das Schmelzgranulat wurde zusammen mit 1,70 kg D-Mannit, 4,10 kg CD-3 und 140 g Natrium-N-Myristoyl-N-methyl-β-alanin in einen Mischer gegeben und 10 min lang zu einer homogenen Masse vermischt. Der erhaltene final blend wurde auf einer Rundläufertablettenpresse FETTE 2090 zu Tabletten mit einem Durchmesser von 30 mm, einer Dicke von 10,0 ± 0,4 mm und einem Gewicht von 10,2 g verpreßt. Angaben zur Härte und Lagerstabilität der Tabletten finden sich in Tabelle 4. Die Messung dieser Parameter erfolgte wie in Beispiel 1 angegeben.

### Beispiel 4

Das Schmelzgranulat wird wie in Beispiel 3 angegeben hergestellt. Das fertige Schmelzgranulat wird im Chargenmischer belassen und es werden 1,70 kg D-Mannit zugegeben. Anschließend wird weitere 8 s lang mit eingeschaltetem Mischer und Messerkopf durchmischt. Der Chargenmischer wird entleert und das Granulat an der Luft abkühlen gelassen. Die Eigenschaften des Granulats finden sich in Tabelle 3.

Dieses Schmelzgranulat wurde zusammen mit 4,10 kg CD-3 und 140 g Natrium-N-Myristoyl-N-methyl-β-alanin in einen Mischer gegeben und 10 min lang zu einer homogenen Mischung vermischt. Aus dem so erhaltenen final blend wurden nach dem in Beispiel 3 angegebenen Verfahren Tabletten verpreßt, Angaben zu deren Härte und Lagerstabilität sind in Tabelle 4 aufgeführt.

### Vergleichsbeispiel 2

In einen handelsüblichen GLATT Wirbelschichtgranulator GCPG800 werden 103,8 kg Natrium-p-toluolsulfonat, 2,1 kg Natriumsulfit, 20,1 kg Penta-Natrium-diethylentriamin-pentaacetat, 48,8 kg Bis(sulfoethyl)hydroxylamin-di-Natrium-Salz, 21,4 kg Lithiumhydroxid-Monohydrat, 201,4 kg Kaliumcarbonat, 18,3 kg Tinopal SFP® und 36,6 kg Mannit gefüllt. Granulation erfolgte durch Aufsprühen einer Lösung von 91,5 kg Polyethylenglykol 4000 in 61,0 l Wasser, wobei bei einem Luftstrom von 3000 bis 4000 m³/h die Temperatur der Pulvermischung auf 38°C konstant gehalten wurde. Anschließend wurde in einem Luftstrom von 55°C getrocknet. Der gesamte Wirbelschichtgranulationsprozeß war nach 2 h 18 min beendet. Aus Tabelle 3 sind Korngrößenverteilung, spezifisches Volumen und Feuchtegehalt des Granulats ersichtlich.

Dieses Granulat wird in einem weiteren Schritt zusammen mit 88,5 kg CD-3 und 3,1 kg Natrium-N-Myristoyl-N-methyl-β-alanin in einen Mischer gegeben und 10 min lang zu einer homogenen Masse vermischt. Der erhaltene final blend wird wie in Beispiel 4 angegeben tablettiert, die Eigenschaften der Tabletten finden sich in Tabelle 4.

**Tabelle 3**

| | Korngrößenverteilung | | | | | | | Spez. Vol. | Feuchte |
|---|---|---|---|---|---|---|---|---|---|
| | >710 | 710-500 | 500-355 | 355-250 | 250-180 | 180-125 | <125 | | |
| | [µm) | [µm] | [µm] | [µm] | [µm] | [µm] | [µm] | [ml/g] | [%] |
| Bsp.3 | 29% | 19% | 21% | 13% | 10% | 6% | 2% | 1,33 | 1,18 |
| Bsp.4 | 17% | 20% | 24% | 18% | 13% | 6% | 2% | 1,34 | 1,45 |
| Vgl.2 | 0,6% | 1,1% | 3,1% | 22,1% | 36,9% | 29,9% | 6,3% | 1,62 | 2,39 |

**Tabelle 4**

| | Versuchsbeginn | | Nach 110 h bei 50°c | | Nach 278 h bei 50°C | |
|---|---|---|---|---|---|---|
| | Dicke [mm] | Härte [N] | Δd[mm] | Härte [N] | Δd[mm] | Härte [N] |
| **Bsp.3** | 9,55 | 720 | 0,02 | 863 | 0,04 | 883 |
| **Bsp.4** | 9,60 | 804 | 0,06 | 987 | 0,06 | 975 |
| **Vgl.2** | 10,36 | 988 | 0,35 | 263 | 0,39 | 274 |

Die in den Beispielen 3 und 4 eingesetzten Rohstoffe wurden in der von den Herstellern gelieferten Qualität eingesetzt, eine Vortrocknung oder andere Verfahrensschritte (beispielsweise Pulverisieren oder Aussieben) wurden nicht durchgeführt. Erfindungsgemäß kann trotz Verzicht auf Vortrocknung ein Granulat mit sehr niedrigem Feuchtegehalt hergestellt werden, die daraus verpreßten Tabletten weisen eine ausreichende Härte auf, die im beschleunigten Lagerungstest bei 50°C sogar noch zunimmt. Die nach dem Stand der Technik des Vergleichsbeispiels 2 hergestellten Tabletten werden (vermutlich aufgrund des höheren Feuchtegehalts des Wirbelschichtgranulats) während der Lagerung unbrauchbar. Dies macht sich bemerkbar in ungenügender Härte, starker Braunverfärbung und Zunahme der Tablettendicke.

### III.Herstellung von Tabletten zur Bleichfixierung von Colorpapieren

### Beispiel 5

Es werden zwei Schmelzgranulate (Granulat A und Granulat B) aus den in den Tabelle 5 angegebenen Bestandteilen hergestellt.

**Tabelle 5**

| **GRANULAT A** | **[g]** |
|---|---|
| Natrium-Eisen(III)-ethylendiamintetraacetat x 3 H₂O | 1825 |
| Polyethylenglykol 4000 | 165 |
| | **1990** |

| **GRANULAT B** | |
|---|---|
| Ammoniumthiosulfat, pulverisiert | 2000 |
| Natriumsulfit | 325 |
| Natriumdisulfit | 143 |
| Polyethylenglykol 4000 | 55 |
| | **2523** |
| | |

| Übrige Pulverbestandteile | **[g]** |
|---|---|
| | |
| Maltodextrin | 15 |
| Natrium-N-Lauroyl-sarkosinat | 45 |
| | **4573** |

Das Ammoniumthiosulfat wurde vor dem Einsatz in einer BAUERMEISTER Pulvermühle mit Turbo-Einsatz auf eine Partikelgröße von weniger als 180 µm vermahlen.

Die Schmelzgranulierungen wurden nacheinander in einem handelsüblichen LÖDIGE Pflugscharmischer vom Typ M5R mit Doppelmantel durchgeführt. Die Temperatur des Wassers im Doppelmantel wurde auf 75°C eingestellt. In beiden Fällen wurde bei eingeschaltetem Mischer und Messerkopf schmelzgranuliert, bis beim Erreichen einer Produkttemperatur von 57°C aus den Pulvermischungen ein staubfreies Schmelzgranulat entstanden war. Die erhaltenen Schmelzgranulate wurden aus dem Mischer entnommen und an der Luft abkühlen gelassen.

Granulat A und Granulat B wurden zusammen mit den in Tabelle 5 angegebenen weiteren Bestandteilen (Maltodextrin und Natrium-N-Lauroyl-sarkosinat) in einem Mischer 10 min lang zu einer homogenen Masse vermischt und der erhaltene final blend in einer hydraulischen Laborpresse zu Tabletten von 30 mm Durchmesser und 10,7 g Gewicht verpreßt. Nach dem Verpressen von 10 Tabletten wurde visuell beurteilt, ob sich Materialreste auf den Stempel- und Matrizenoberflächen abgelagert hatten. Der Grad der Anhaftungen wurde in eine Skala von 0 bis 5 eingestuft (bei maximaler Anhaftung = 5 ist eine kontinuierliche Tablettenfertigung nicht möglich). Der Grad der Anhaftung wurde auf dieser Skala mit 1 beurteilt. Die erhaltenen Tabletten weisen eine durchschnittliche Dicke von 9,73 mm und eine durchschnittliche Härte von 526 N auf. Dieses Beispiel zeigt, daß auch beim Verpressen von mehr als einem Schmelzgranulat zusammen mit weiteren Bestandteilen Tabletten ausreichender Härte entstehen und daß sich beim Herstellen dieser Tabletten keine eine kontinuierliche Tablettenproduktion behindernde Materialanhaftung an der verwendeten Tablettenpresse bildet.

### IV. Herstellung von Tabletten zur Fixierung von Colornegativfilmen

### Beispiele 6 bis 9

Diese Beispiele zeigen die Herstellung von Tabletten zur Fixierung von Colornegativfilmen, wobei im Rahmen der Schmelzgranulierung unterschiedliche Hilfsstoffe verwendet werden. Tabelle 6 zeigt die jeweilig verwendeten Einsatzstoffe.

**Tabelle 6**

| | Beispiel Nr. | | | |
|---|---|---|---|---|
| | **6** | **7** | **8** | **9** |
| Granulat | **[g]** | **[g]** | **[g]** | **[g]** |
| Ammoniumthiosulfat, pulverisiert | 1925,0 | 1925,0 | 1925,0 | 1925,0 |
| Natriumsulfit | 209,0 | 209,0 | 209,0 | 209,0 |
| EDTA-Na₂ | 27,5 | 27,5 | 27,5 | 27,5 |
| 2-Methyl-2-propyl-1,3-propandiol | | | 110,0 | 66,0 |
| Pluronic PE 6800® (BASF) | | 209,0 | | 66,0 |
| Polyethylenglykol 6000 | 209,0 | | 99,0 | 77,0 |
| | **2370,5** | **2370,5** | **2370,5** | **2370,5** |

| Übrige Pulverbestandteile | | | | |
|---|---|---|---|---|
| D-Sorbit | 22,0 | 22,0 | 22,0 | 22,0 |
| Natrium-N-Lauroyl-sarkosinat | 4,4 | 4,4 | 4,4 | 4,4 |
| | **2396,9** | **2396,9** | **2396,9** | **2396,9** |

Beispiel 6 verwendet als Hilfsstoff Polyethylenglykol 6000, Beispiel 7 Pluronic PE 6800®. Bei diesem Stoff handelt es sich um ein nichtionisches Tensid, nämlich ein Propylenoxid-Ethylenoxid-Blockcopolymerisat mit einem Ethylenoxidanteil von etwa 80%. Beispiel 8 verwendet als Hilfsstoff eine Mischung aus Polyethylenglykol 6000 und 2-Methyl-2-propyl-1,3-propandiol, Beispiel 9 eine Mischung aller drei genannten Hilfsstoffe.

Die eingesetzten Rohstoffe werden bis auf das Ammoniumthiosulfat keiner weiteren Vorbehandlung unterworfen, das Ammoniumthiosulfat wird jedoch wie in Beispiel 5 angegeben zuvor vermahlen.

Die in Tabelle 6 angegebenen Rohstoffe mit Ausnahme von D-Sorbit und Natrium-N-Lauroyl-sarkosinat werden in einen LÖDIGE Pflugscharmischer vom Typ M5R mit Doppelmantel gegeben. Der Doppelmantel wurde mit auf 77°C temperierten Wasser erwärmt. Anschließend wurde mit eingeschaltetem Messerkopf gemischt, bis bei Erreichen einer Produkttemperatur von etwa 58°C aus den Pulvermischungen ein staubfreies Granulat wurde. Die erhaltenen Granulate wurden sofort aus dem Mischer entnommen und an der Luft abkühlen gelassen. Jedes der vier Granulate wurde anschließend mit den in Tabelle 6 angegebenen Mengen von D-Sorbit und Natrium-N-Lauroyl-sarkosinat in einen Mischer 10 min lang homogen vermischt, der erhaltene final blend wurde in einer hydraulischen Laborpresse zu Tabletten mit einem Durchmesser von 30 mm und einem Gewicht von 11,0 g verpreßt.

In Tabelle 7 sind zu jeder der erhaltenen Tablettenchargen durchschnittliche Dicke, Härte, Anhaftung (siehe Beispiel 5) und Auflösegeschwindigkeit angegeben. Die Auflösegeschwindigkeit wurde bestimmt, indem man fünf Tabletten in 275 ml Wasser mit einer Temperatur von 20°C gab und mit einem Magnetrührer rührte. Die Zeit bis zur vollständigen Auflösung ist in der Tabelle angegeben.

**Tabelle 7**

| Beispiel Nr. | Dicke [mm] | Härte [N] | Anhaftung | Auflösung [min] |
|---|---|---|---|---|
| 6 | 9,99 | 973 | 1 | 10,5 |
| 7 | 10,07 | 620 | 4 | 19,5 |
| 8 | 10,11 | 683 | 2 | 16,5 |
| 9 | 10,16 | 569 | 2 | 10,0 |

Die Beispiele zeigen, daß durch Wahl der Hilfsstoffe Tabletten mit unterschiedlichen Eigenschaften hergestellt werden können. Insbesondere die Lösegeschwindigkeit läßt sich variieren.

## Patentansprüche

1. Verfahren zur Herstellung von als Granulat formulierten fotografischen Prozeßchemikalien, mit den Schritten:
a) Zusammengeben der Prozeßchemikalien mit wenigstens einem fotografisch inerten oder fotografisch förderlichen, wasserlöslichen, oberhalb 25°C schmelzenden Hilfsstoff;
b) Erwärmen der Mischung auf eine Temperatur, die mindestens der Schmelztemperatur des Hilfsstoffs entspricht;
c) Durchführen einer Schmelzgranulierung unter Vermischung von Prozeßchemikalien und Hilfsstoff.

2. Verfahren nach Anspruch 1, dadurch gekennzeichnet, daß der Hilfsstoff bei 30 - 180°C, vorzugsweise 40 - 120°C schmelzbar ist.

3. Verfahren nach Anspruch 1 oder 2, dadurch gekennzeichnet, daß der Hilfsstoff einen oder mehrere der Komponenten ausgewählt aus der Gruppe bestehend aus Polyethylenglykol, Polyvinylalkohol, Aminoalkylmethacrylatcopolymeren, Methacrylsäure-Methacrylatcopolymeren, MethacrylsäureAcrylatcopolymeren, Carbonsäuren, Propanolen, Propandiolen, Butanolen, Polyalkoholen und Tensiden enthält.

4. Verfahren nach Anspruch 3, dadurch gekennzeichnet, daß der Hilfsstoff Polyethylenglykol enthält.

5. Verfahren nach Anspruch 4, dadurch gekennzeichnet, daß in dem Polyethylenglykol weitere Hilfsstoffbestandteile gelöst und/oder suspendiert sind.

6. Verfahren zur Herstellung von als Tablette formulierten fotografischen Prozeßchemikalien, mit den Schritten:
a) Schmelzgranulieren wenigstens eines Teils der Tablettenrohstoffe in einem Verfahren gemäß einem der Ansprüche 1 bis 5;
b) Verpressen des schmelzgranulats und ggf. der verbleibenden Tablettenrohstoffe zu einer Tablette.

7. Verfahren nach Anspruch 6, dadurch gekennzeichnet, daß die Härte der erhaltenen Tablette wenigstens 400 N beträgt.
